# EUROPEAN PATENT APPLICATION

(11) **EP 4 421 202 A1**
(43) Date of publication of application: **28.08.2024**
(21) Application number: 22907897.7
(22) Date of filing: 13.12.2022
(51) Int. Cl.: C22C 38/02, C22C 38/04, C22C 38/06, C22C 38/14, C22C 38/00, C21D 5/14, C21D 8/02, C21D 9/56, C21D 9/00, B23D 29/00

(54) **GRAPHITE STEEL WIRE ROD FOR TV PEM NUT PARTS, GRAPHITE STEEL, AND MANUFACTURING AND MACHINING METHOD THEREFOR**

(30) Priority: 14.12.2021 KR 20210178347
(71) Applicant: POSCO Co., Ltd, Pohang-si, Gyeongsangbuk-do 37859 (KR)
(72) Inventor: CHOI, Sangwoo, Pohang-si Gyeongsangbuk-do 37664 (KR); LIM, Namsuk, Pohang-si Gyeongsangbuk-do 37669 (KR); PARK, Sewon, Pohang-si Gyeongsangbuk-do 37881 (KR)
(74) Representative: Nederlandsch Octrooibureau
(86) International application number: PCT/KR2022/020239
(87) International publication number: WO 2023/113430

(57) **Abstract**

The present disclosure relates to a graphite steel wire rod for TV PEM nut parts, a graphite steel, and a manufacturing and cutting method therefor, and more particularly, to a cutting method for manufacturing industrial parts, a graphite steel wire rod, a graphite steel wire rod, a graphite steel, and a manufacturing method therefor.

## Description

### [Technical Field]

The present disclosure relates to a graphite steel wire rod and a graphite steel for TV PEM nut parts, methods for manufacturing and cutting therefor. More particularly, it relates to a cutting method for manufacturing industrial parts and a graphite steel wire rod, a graphite steel, and a manufacturing method therefor.

### [Background Art]

In general, free-cutting steels to which machinability-imparting elements such as Pb, Bi, and S are added have been used as a material for mechanical components that require machinability. In order to improve machinability of steel materials, a liquid metal embrittlement phenomenon may be used by adding low-melting point machinability-imparting elements such as Pb and Bi to steel, or a large amount of MnS may be formed in steel. Such free-cutting steels have excellent machinability such as surface roughness, chip treatment, and tool life during cutting.

However, Pb-added free-cutting steel having excellent machinability, is very harmful to the human body because harmful substances such as toxic fume are emitted during a cutting process and may not be easily recycled. Therefore, addition of S, Bi, Te, Sn, and the like is suggested for replacement thereof. However, it has been known that many problems may be caused thereby, for example, cracks easily occur while manufacturing steel materials causing considerable difficulties in production or cracks may occur during hot rolling.

Free-cutting steel developed to solve the above-described problems is a graphite free-cutting steel. The graphite free-cutting steel is a steel containing fine graphite grains inside a ferrite matrix or a ferrite-pearlite matrix and having excellent machinability because fine graphite grains contained therein serve as a crack source during cutting, thereby acting as a chip breaker.

However, despite these advantages of the graphite free-cutting steel, the graphite free-cutting steel is not commercialized as of yet. When carbon is added to steel, graphite that is a stable phase precipitates as cementite that is a metastable phase, so that it is difficult to precipitate graphite without a long-term heat treatment. During such a long-term heat treatment process, decarburization occurs, causing adverse effects on the performance of final products.

In addition, although graphite grains are precipitated by graphitization heat treatment, in the case where non-uniformly distributed with irregular shapes, the distribution of physical properties is uneven during cutting, and the chip treatment or surface roughness are very deteriorated, and the tool life is also shorten, making it difficult to obtain advantages of the graphite free-cutting steel. Therefore, there is a need to provide a graphite free-cutting steel wire rod in which fine graphite grains are uniformly distributed in a matrix during heat treatment with a considerably reduced heat treatment time and a cutting method to obtain excellent machinability (i.e., complex CNC lathe and CAM automatic lathe).
(Related Art Document) Patent Document 1: KR 10-2015-0057400 A

### [Disclosure]

### [Technical Problem]

The present disclosure provides a design of components of graphite steel and cutting conditions for manufacturing industrial parts, a steel wire rod for manufacturing graphite steel, a graphite steel, and a manufacturing method therefor by graphitization heat treatment.

However, the technical problems to be solved by the present disclosure are not limited to the aforementioned problems, and any other technical problems not mentioned herein will be clearly understood from the following description by those skilled in the art to which the present disclosure pertains.

### [Technical Solution]

A graphite steel wire rod according to an embodiment of the present disclosure includes 0.60 to 0.79% of carbon (C), 2.0 to 2.5% of silicon (Si), 0.7 to 1.3% of manganese (Mn), 0.2 to 0.5% of sulfur (S), 0.01 to 0.05% of aluminum (Al), 0.005 to 0.02% of titanium (Ti), 0.003 to 0.015% of nitrogen (N), 0.0001 to 0.015% of phosphorus (P), and the balance of iron (Fe) and inevitable impurities.

A method for manufacturing a graphite steel wire rod according to another embodiment of the present disclosure includes: preparing a billet including, in percent by weight (wt%), 0.60 to 0.79% of carbon (C), 2.0 to 2.5% of silicon (Si), 0.7 to 1.3% of manganese (Mn), 0.2 to 0.5% of sulfur (S), 0.01 to 0.05% of aluminum (Al), 0.005 to 0.02% of titanium (Ti), 0.003 to 0.015% of nitrogen (N), 0.0001 to 0.015% of phosphorus (P), and the balance of iron (Fe) and inevitable impurities; heating the billet; hot rolling the heated billet into a wire rod; and cooling the wire rod.

A graphite steel according to another embodiment of the present disclosure includes, in percent by weight (wt%), 0.60 to 0.79% of carbon (C), 2.0 to 2.5% of silicon (Si), 0.7 to 1.3% of manganese (Mn), 0.2 to 0.5% of sulfur (S), 0.01 to 0.05% of aluminum (Al), 0.005 to 0.02% of titanium (Ti), 0.003 to 0.015% of nitrogen (N), 0.0001 to 0.015% of phosphorus (P), and the balance of iron (Fe) and inevitable impurities, wherein in a microstructure, graphite grains are distributed in a ferrite matrix, a graphitization rate is 90% or more, and a pearlite fraction is less than 10%.

A method for manufacturing a graphite steel according to another embodiment of the present disclosure includes: manufacturing a wire rod including, in percent by weight (wt%), 0.60 to 0.79% of carbon (C), 2.0 to 2.5% of silicon (Si), 0.7 to 1.3% of manganese (Mn), 0.2 to 0.5% of sulfur (S), 0.01 to 0.05% of aluminum (Al), 0.005 to 0.02% of titanium (Ti), 0.003 to 0.015% of nitrogen (N), 0.0001 to 0.015% of phosphorus (P), and the balance of iron (Fe) and inevitable impurities; and performing graphitization heat treatment on the manufactured wire rod.

A cutting method according to another embodiment of the present disclosure includes cutting the graphite steel by using either complex CNC lathe or CAM automatic lathe.

### [Advantageous Effects]

The graphite free-cutting steel according to the present disclosure may be applied to materials of small parts such as TV PEM nuts due to excellent machinability.

### [Best Mode]

A graphite steel wire rod according to an embodiment of the present disclosure includes 0.60 to 0.79% of carbon (C), 2.0 to 2.5% of silicon (Si), 0.7 to 1.3% of manganese (Mn), 0.2 to 0.5% of sulfur (S), 0.01 to 0.05% of aluminum (Al), 0.005 to 0.02% of titanium (Ti), 0.003 to 0.015% of nitrogen (N), 0.0001 to 0.015% of phosphorus (P), and the balance of iron (Fe) and inevitable impurities.

### [Modes of the Invention]

Hereinafter, preferred embodiments of the present disclosure will now be described. However, the present disclosure may be embodied in many different forms and should not be construed as being limited to the embodiments set forth herein. Rather, these embodiments are provided so that this disclosure will be thorough and complete, and will fully convey the scope of the disclosure to those skilled in the art.

The terms used herein are merely used to describe particular embodiments. Thus, an expression used in the singular encompasses the expression of the plural, unless it has a clearly different meaning in the context.

Hereinafter, the unit is wt% unless otherwise stated. In addition, it is to be understood that the terms such as "including" or "having" are intended to indicate the existence of components disclosed in the specification, and are not intended to preclude the possibility that one or more other components may exist or may be added.

Meanwhile, unless otherwise defined, all terms used herein have the same meaning as commonly understood by one of ordinary skill in the art to which this disclosure belongs. Thus, these terms should not be interpreted in an idealized or overly formal sense unless expressly so defined herein. As used herein, the singular forms are intended to include the plural forms as well, unless the context clearly indicates otherwise.

In addition, the terms "about", "substantially", etc. used throughout the specification mean that when a natural manufacturing and substance allowable error are suggested, such an allowable error corresponds a value or is similar to the value, and such values are intended for the sake of clear understanding of the present invention or to prevent an unconscious infringer from illegally using the disclosure of the present invention.

Hereinafter, the graphite steel wire rod and the graphite steel for TV PEM nut parts having excellent machinability, methods for manufacturing and cutting therefor will be described in detail.

### [Graphite Steel Wire Rod]

A graphite steel wire rod according to an embodiment of the present disclosure may include, in percent by weight (wt%), 0.60 to 0.79% of carbon (C), 2.0 to 2.5% of silicon (Si), 0.7 to 1.3% of manganese (Mn), 0.2 to 0.5% of sulfur (S), 0.01 to 0.05% of aluminum (Al), 0.005 to 0.02% of titanium (Ti), 0.003 to 0.015% of nitrogen (N), 0.0001 to 0.015% of phosphorus (P), and the balance of iron (Fe) and inevitable impurities.

### Carbon (C): 0.60 to 0.79 wt%

Carbon is an essential element for forming graphite grains. If the C content is less than 0.60 wt%, the effect on improving machinability is insufficient and distribution of graphite grains is non-uniform even after graphitization is completed. On the contrary, if the C content exceeds 0.79 wt%, coarse graphite grains are formed and the aspect ratio increases, so that machinability and particularly surface roughness, may deteriorate. Therefore, the upper limit of the C content may be controlled to 0.79 wt%.

### Silicon (Si): 2.0 to 2.5 wt%

Silicon is an essential component, as a deoxidizer, to manufacture molten steel and is a graphitization-promoting element allowing carbon to precipitate into graphite by destabilizing cementite contained in steel, and thus silicon is actively added. In order to achieve this effect, the Si content may be 2.0 wt% in the present disclosure. However, if the Si content is excessive, not only the effect may be saturated, but also hardness may increase due to solid solution strengthening effect, leading to acceleration of tool wear during cutting, brittleness may be caused by an increase in non-metallic inclusions, and excessive decarburization may occur during hot rolling. Therefore, an upper limit of the Si content may be controlled to 2.5 wt%.

### Manganese (Mn): 0.7 to 1.3 wt%

Manganese improves strength and impact properties of steel and combines with sulfur contained in steel to form MnS inclusions, thereby contributing to improvement of machinability. In order to achieve these effects in the present disclosure, the Mn content may be 0.7 wt% or more. On the contrary, an excessive Mn content may inhibit graphitization to delay graphitization completion time and may increase strength and hardness to deteriorate machinability. Therefore, an upper limit of the Mn content may be controlled to 1.3 wt%.

### Sulfur (S): 0.2 to 0.5 wt%

Sulfur combines with manganese to induce production of MnS inclusions, thereby improving machinability. However, if the S content is excessive, not only graphitization of carbon in steel may be inhibited, but also S may be segregated into crystal grains to deteriorate toughness, a low-melting point emulsion may be formed to impair hot rollability, and mechanical anisotropy may appear due to MnS elongated by the rolling. Therefore, in the present disclosure, it is desirable to appropriately adjust the S content to improve machinability without impairing physical properties by sulfur. Specifically, if the S content is less than 0.2 wt%, inferior machinability is obtained due to insufficient formation of inclusions such as MnS, and thus the S content need to be controlled thereabove. However, if the S content is greater than 0.5 wt%, quality defects such as surface defects may occur, and thus the S content needs to be controlled therebelow.

### Aluminum (Al): 0.01 to 0.05 wt%

Aluminum is the second most important material for promoting graphitization next silicon. This is because aluminum, when existing as an Al solid solution, destabilizes cementite, and thus Al needs to exit as a solid solution. In the present disclosure, Al may be contained in an amount of 0.01 wt% or more to obtain such effects. On the contrary, if the Al content is excessive, not only the effects may be saturated, but also nozzle clogging may be induced during continuous casting and AlN may be formed in austenite grain boundaries, causing non-uniform distribution of graphite including AlN as nuclei in the grain boundaries. Therefore, an upper limit of the Al content may be controlled to 0.05 wt%.

### Titanium (Ti): 0.005 to 0.020 wt%

Titanium, like aluminum, combines with nitrogen to form nitrides such as TiN and AlN, and these nitrides act as nuclei for graphite formation during isothermal heat treatment. While AlN that is formed at a low temperature is precipitated non-uniformly after austenite is formed, TiN that is formed at a temperature higher than that of AlN is crystallized before formation of austenite is completed so as to be uniformly distributed in the austenite grain boundaries and in the grains. Therefore, graphite grains formed of TiN as nuclei are also distributed finely and uniformly. Although the Ti content may be 0.005 wt% or more to obtain these effects, addition of Ti in an amount greater than 0.020 wt% may cause consumption of carbon, which is required for forming graphite, by forming coarse carbonitrides, thereby deteriorating graphitization. Therefore, an upper limit of the Ti content may be controlled to 0.020 wt%.

### Nitrogen (N): 0.003 to 0.015 wt%

Nitrogen combines with titanium and aluminum to form TiN, AlN, and the like, and nitrides such as AlN are mainly formed in austenite grain boundaries. Because graphite is formed using such nitrides as nuclei during graphitization heat treatment, non-uniform distribution of graphite may be caused. Therefore it is necessary to add an appropriate amount of nitrogen thereof. If the amount of nitrogen added is excessive, nitrogen failing to combine with nitride-forming elements and remaining in steel as a solid solution increases strength and exhibiting adverse effects of delaying graphitization by stabilizing cementite. Therefore, a lower limit of the N content may be controlled to 0.003 wt% and an upper limit thereof may be controlled to 0.015 wt% such that nitrogen is consumed to form nitrides as nuclei for forming graphite and does not remain as a solid solution.

### Phosphorus (P): 0.0001 to 0.015 wt%

Phosphorus, when added in a small amount, may weaken grain boundaries of steel to improve machinability. However, phosphorus, when added in an excessive amount, may increase hardness of ferrite due to the solid solution strengthening effect, may reduce toughness and resistance to delayed fracture of steel materials, and may induce surface defects. Thus, the P content may be controlled as low as possible within a range of 0.0001 to 0.015 wt%. Particularly, it is important to control an upper limit thereof, and the upper limit is controlled to 0.015 wt% in the present disclosure.

### Other components

The remaining component of the composition of the present disclosure is iron (Fe). However, the composition may include unintended impurities inevitably incorporated from raw materials or surrounding environments during common manufacturing processes. However, in the present disclosure, boron (B) or oxygen (O) may not be substantially included. The impurities are not specifically mentioned in the present disclosure, as they are known to any person skilled in the art.

### Microstructure

In addition, in the graphite steel wire rod according to another embodiment of the present disclosure, an area fraction of pearlite may be 90% or more and an area fraction of ferrite may be less than 10%, and preferably, an area fraction of pearlite may be 95% or more and an area fraction of ferrite may be less than 5%. In the present disclosure, graphite grains are produced by degradation of pearlite. Thus, as the area fraction of pearlite decreases, the area fraction of graphite grains decreases and the graphite grains are not uniformly distributed. An upper limit of the area fraction of pearlite is not particularly limited because a high area fraction of pearlite is advantageous to obtain uniform and fine graphite grains.

All of the descriptions given above with reference to the graphite steel wire rod may be applied to a method for manufacturing a graphite steel wire rod, a graphite steel, and a manufacturing and cutting method for the graphite steel to be described below. Although duplicate descriptions may be omitted, the omitted descriptions may also be applied thereto in the same manner.

### [Method for Manufacturing Graphite Steel Wire Rod]

A method for manufacturing a graphite steel wire rod according to another embodiment of the present disclosure includes: preparing a billet including, in percent by weight (wt%), 0.60 to 0.79% of carbon (C), 2.0 to 2.5% of silicon (Si), 0.7 to 1.3% of manganese (Mn), 0.2 to 0.5% of sulfur (S), 0.01 to 0.05% of aluminum (Al), 0.005 to 0.02% of titanium (Ti), 0.003 to 0.015% of nitrogen (N), 0.0001 to 0.015% of phosphorus (P), and the balance of iron (Fe) and inevitable impurities; heating the billet; hot rolling the heated billet intoa wire rod; and cooling the wire rod.

### Heating Process

In addition, according to an embodiment of the present disclosure, the heating process may include heat treatment in a temperature range of 1050±100°C for 60 minutes of more.

Before hot-rolling the billet, the billet is maintained in a temperature range of 1050±100°C for 60 minutes or more. A heating temperature of the billet lower than 950°C is not preferable, because a load may increase during rolling, resulting in a decrease in rolling productivity. A heating temperature higher than 1150°C is not preferable, because costs may increase and decarburization may also be accelerated, so that a decarburized layer becomes thicker so as to remain in final products. The reason why the heating time is 60 minutes or more is that it is difficult to obtain uniform temperature distribution inside and outside of the billet for rolling the wire rod when the heating time is less than 60 minutes.

### Rolling Process

In addition, according to an embodiment of the present disclosure, the hot rolling of the heated billet into a wire rod may include hot rolling the billet in a temperature range of 900 to 1150°C.

The rolling temperature of the wire rod may be controlled in the range of 900 to 1150°C because surface defects easily occur or a rolling load increases during the hot rolling at a temperature lower than 900°C making the rolling difficult, and austenite grain size (AGS) increases at a temperature higher than 1150°C so that graphitization heat treatment time may increase after the hot rolling of the wire rod.

### Cooling Process

In addition, according to an embodiment of the present disclosure, the cooling process may include cooling the wire rod to 500°C at a cooling rate of 0.1 to 10.0°C/s, specifically, cooling the wire rod to 500°C in a temperature range of 750 to 900°C at a cooling rate of 0.1 to 10.0°C/s.

Also, according to an embodiment of the present disclosure, the method may further include an air cooling process after the cooling process.

A cooling rate exceeding 10.0°C/s is not preferable, because a hard phase such as martensite may be formed, resulting in wire breakage during cold drawing, which is a process following the rolling of the wire rod. A cooling rate less than 0.1°C/s is not preferable, because proeutectoid may be excessively formed to decrease a fraction of pearlite or crystal grains may coarsen resulting in non-uniform distribution of graphite grains that are formed after graphitization heat treatment.

### [Graphite Steel]

A graphite steel according to an embodiment of the present disclosure includes, in percent by weight (wt%), 0.60 to 0.79% of carbon (C), 2.0 to 2.5% of silicon (Si), 0.7 to 1.3% of manganese (Mn), 0.2 to 0.5% of sulfur (S), 0.01 to 0.05% of aluminum (Al), 0.005 to 0.020% of titanium (Ti), 0.003 to 0.015% of nitrogen (N), 0.0001 to 0.015% of phosphorus (Pa), and the balance of iron (Fe) and inevitable impurities, wherein in a microstructure, graphite grains are distributed in a ferrite matrix, a pearlite fraction is less than 10%, and a graphitization rate is 90% or more.

The graphite steel according to an embodiment of the present disclosure may have a graphitization rate of 95% or more, more preferably 99% or more.

Meanwhile, the graphitization rate refers to a ratio of an amount of carbon existing as the graphite state to an amount of carbon added to steel and is defined by Equation 1 below. Graphitization rate (%) = (1 - amount of C in undegraded pearlite/amount of C in steel)×100
(Here, the graphitization rate is 100% in the case where there is no undegraded pearlite)

A graphitization rate of 90% or more indicates that most carbon added to the steel is consumed to form graphite and the graphite steel has a microstructure in which graphite grains are distributed in a ferrite matrix in which undegraded pearlite does not exist. In this regard, amounts of carbon as solid solutions contained in ferrite and in fine carbides are extremely small and thus not considered.

### [Method for Manufacturing Graphite Steel]

A method for manufacturing a graphite steel according to an embodiment of the present disclosure includes: manufacturing a wire rod including, in percent by weight (wt%), 0.60 to 0.79% of carbon (C), 2.0 to 2.5% of silicon (Si), 0.7 to 1.3% of manganese (Mn), 0.2 to 0.5% of sulfur (S), 0.01 to 0.05% of aluminum (Al), 0.005 to 0.02% of titanium (Ti), 0.003 to 0.015% of nitrogen (N), 0.0001 to 0.015% of phosphorus (P), and the balance of iron (Fe) and inevitable impurities; and performing graphitization heat treatment on the manufactured wire rod.

In addition, according to an embodiment of the present disclosure, the graphitization heat treatment may include heat treatment in a temperature range of 700 to 800°C for 5 hours or more, preferably, for 5 hours to 20 hours.

If the wire rod is heat-treated in a temperature range of 700 to 800°C for 5 hours or more, the graphitization rate may reach 90% or more. At a temperature lower than 700°C, graphitization heat treatment time increases to exceed 20 hours. A temperature higher than 800°C is not preferable, because graphitization heat treatment time increases.

### [Cutting Method]

A cutting method according to an embodiment of the present disclosure is performed by cutting the graphite steel according to the present disclosure by using either complex CNC lathe or CAM automatic lathe.

In addition, according to an embodiment, the complex CNC lathe may have a cutting speed of 1500 RPM or more and a feedrate of 0.03 mm/rev or more, and the CAM automatic lathe may also have a cutting speed of 1500 RPM or more and a feedrate of 0.03 mm/rev or more.

The graphite free-cutting steel wire rod prepared as described above may be cut by a steel cutting company to manufacture small industrial parts such as TV PEM nut parts. Products with machinability inferior to that of normal free-cutting steels will not be able to enter the market. In order to overcome this, the present disclosure provides a manufacturing method by a cutting process under the conditions that the complex CNC lathe and/or the CAM automatic lathe have a cutting speed of 1500 RPM or more and a feedrate of 0.03 mm/rev or more. If the complex CNC lathe and/or the CAM automatic lathe have a cutting speed less than 1500 RPM and/or a feedrate less than 0.03 amm/rev, machinability may deteriorate. As the cutting speed and the feedrate increase, machinability may be improved to a level equivalent to that of normal free-cutting steels.

Hereinafter, the present disclosure will be described in more detail with reference to the following examples.

These embodiments are provided to fully convey the scope of the disclosure to those skilled in the art. The present disclosure may, however, be embodied in many different forms and should not be construed as limited to the exemplary embodiments set forth herein.

### Embodiments

Billets having compositions shown Table 1 below were maintained at a heating temperature of 1050°C for 90 minutes and rolled at a high speed to manufacture wire rods of Embodiments 1 to 11 and Comparative Examples 1 to 7 having a diameter of 19 mm.

**[Table 1]**

| Category | Composition of alloying elements (wt%) | | | | | | | |
|---|---|---|---|---|---|---|---|---|
| | C | Si | Mn | S | Al | Ti | N | P |
| Embodiment 1 | 0.67 | 2.10 | 0.85 | 0.31 | 0.015 | 0.015 | 0.005 | 0.005 |
| Embodiment 2 | 0.75 | 2.15 | 0.96 | 0.24 | 0.023 | 0.017 | 0.008 | 0.003 |
| Embodiment 3 | 0.72 | 2.35 | 1.07 | 0.35 | 0.043 | 0.007 | 0.010 | 0.010 |
| Embodiment 4 | 0.68 | 2.18 | 1.16 | 0.45 | 0.035 | 0.009 | 0.009 | 0.007 |
| Embodiment 5 | 0.72 | 2.25 | 0.95 | 0.35 | 0.040 | 0.012 | 0.014 | 0.012 |
| Embodiment 6 | 0.62 | 2.48 | 0.80 | 0.25 | 0.042 | 0.006 | 0.012 | 0.011 |
| Embodiment | 0.73 | 2.42 | 1.20 | 0.30 | 0.034 | 0.011 | 0.006 | 0.009 |
| 7 | | | | | | | | |
| Embodiment 8 | 0.78 | 2.32 | 1.25 | 0.43 | 0.019 | 0.016 | 0.008 | 0.006 |
| Embodiment 9 | 0.75 | 2.15 | 0.95 | 0.27 | 0.027 | 0.009 | 0.013 | 0.002 |
| Embodiment 10 | 0.75 | 2.26 | 1.15 | 0.26 | 0.030 | 0.018 | 0.007 | 0.005 |
| Embodiment 11 | 0.73 | 2.46 | 1.20 | 0.42 | 0.020 | 0.008 | 0.008 | 0.014 |
| Comparative Example 1 | 0.63 | 2.00 | 1.35 | 0.05 | 0.005 | 0.016 | 0.001 | 0.020 |
| Comparative Example 2 | 0.68 | 2.20 | 1.41 | 0.13 | 0.006 | 0.020 | 0.002 | 0.030 |
| Comparative Example 3 | 0.73 | 2.25 | 1.50 | 0.56 | 0.075 | 0.009 | 0.018 | 0.018 |
| Comparative Example 4 | 0.95 | 2.15 | 0.40 | 0.11 | 0.060 | 0.018 | 0.020 | 0.021 |
| Comparative Example 5 | 0.55 | 2.60 | 0.56 | 0.60 | 0.003 | 0.025 | 0.025 | 0.025 |
| Comparative Example 6 | 0.80 | 2.75 | 0.65 | 0.15 | 0.065 | 0.030 | 0.021 | 0.019 |
| Comparative Example 7 | 0.75 | 2.80 | 0.60 | 0.10 | 0.06 | 0.002 | 0.022 | 0.030 |

In addition, after manufacturing the wire rod by rolling and cooling, the area fraction of pearlite in the microstructure was measured, and cooling start temperature, cooling rate, and pearlite area fraction in this case are shown in Table 2 below.

Also, the manufactured wire rod was subjected to graphitization heat treatment, and graphitization heat treatment time and graphitization rate were measured and shown in Table 2 below. Graphitization heat treatment was performed by constantly applying "temperature - 50°C" as a graphitization heat treatment temperature.

**[Table 2]**

| Category | Wire rod | | | Graphitization | |
|---|---|---|---|---|---|
| | Cooling start temperature (°C) | Cooling rate (°C/s) | Area fraction of Pearlite (%) | Time (hr) | Graphitizati on rate (%) |
| Embodiment 1 | 880 | 0.5 | 95.1 | 6.0 | 100 |
| Embodiment 2 | 865 | 7.5 | 96.5 | 9.5 | 100 |
| Embodiment 3 | 835 | 1.5 | 95.1 | 11.0 | 100 |
| Embodiment 4 | 760 | 3.2 | 96.0 | 6.5 | 100 |
| Embodiment 5 | 780 | 5.0 | 97.5 | 13.5 | 100 |
| Embodiment 6 | 845 | 2.0 | 95.5 | 5.5 | 100 |
| Embodiment 7 | 800 | 9.0 | 96.5 | 16.5 | 100 |
| Embodiment 8 | 770 | 4.5 | 96.0 | 8.2 | 100 |
| Embodiment 9 | 890 | 6.0 | 96.5 | 18.5 | 100 |
| Embodiment 10 | 780 | 5.0 | 98.0 | 5.7 | 100 |
| Embodiment 11 | 800 | 6.5 | 99.0 | 12.5 | 100 |
| Comparative Example 1 | 910 | 0.05 | 93.0 | 1.0 | 75 |
| Comparative Example 2 | 860 | 13.0 | 93.5 | 2.5 | 80 |
| Comparative Example 3 | 805 | 11.5 | 94.2 | 3.0 | 86 |
| Comparative Example 4 | 740 | 0.07 | 93.2 | 1.5 | 70 |
| Comparative Example 5 | 885 | 0.04 | 93.5 | 4.5 | 86 |
| Comparative | 830 | 14.0 | 94.1 | 4.0 | 84 |
| Example 6 | | | | | |
| Comparative Example 7 | 850 | 16.0 | 93.5 | 3.5 | 85 |

In Table 2, a (100%-graphitization rate) structure consists of MnS inclusions, pearlite, and some common inclusions, and a graphitized structure consists of ferrite and graphite grains.

It was confirmed that the area fraction of pearlite and graphitization rate may be achieved under the manufacturing conditions of the wire rod and graphitization as shown in Table 2.

In addition, Tables 3 and 4 show results of Embodiments and comparative examples under different cutting conditions to manufacture for TV PEM nut parts. Table 3 shows CNC lathe processing conditions, and Table 4 shows CAM lathe processing conditions.

**[Table 3]**

| Category | Cutting speed (RPM) | Feedrate (mm/rev) | Machinability (%) |
|---|---|---|---|
| Embodiment 1 | 1,500 | 0.045 | 100 |
| Embodiment 2 | 2,000 | 0.1 | 100 |
| Embodiment 3 | 2,050 | 0.05 | 100 |
| Embodiment 4 | 1,800 | 0.25 | 100 |
| Embodiment 5 | 4,000 | 0.15 | 100 |
| Embodiment 6 | 3,500 | 0.3 | 100 |
| Embodiment 7 | 2,700 | 0.35 | 100 |
| Embodiment 8 | 1,600 | 0.035 | 100 |
| Embodiment 9 | 2,000 | 0.05 | 100 |
| Embodiment 10 | 2,300 | 0.09 | 100 |
| Embodiment 11 | 3,200 | 0.1 | 100 |
| Comparative Example 1 | 950 | 0.02 | 81 |
| Comparative Example 2 | 1,000 | 0.02 | 84 |
| Comparative Example 3 | 1,350 | 0.025 | 91 |
| Comparative Example 4 | 1,400 | 0.015 | 94.5 |
| Comparative Example 5 | 1,150 | 0.012 | 90 |
| Comparative Example 6 | 1,200 | 0.01 | 93 |
| Comparative Example 7 | 950 | 0.01 | 85 |

**[Table 4]**

| Category | Cutting speed (RPM) | Feedrate (mm/rev) | Machinability (%) |
|---|---|---|---|
| Embodiment 1 | 1,050 | 0.045 | 100 |
| Embodiment 2 | 2,000 | 0.1 | 100 |
| Embodiment 3 | 2,100 | 0.05 | 100 |
| Embodiment 4 | 1,900 | 0.25 | 100 |
| Embodiment 5 | 2,500 | 0.15 | 100 |
| Embodiment 6 | 3,500 | 0.3 | 100 |
| Embodiment 7 | 2,700 | 0.35 | 100 |
| Embodiment 8 | 3,600 | 0.035 | 100 |
| Embodiment 9 | 2,000 | 0.05 | 100 |
| Embodiment 10 | 2,300 | 0.09 | 100 |
| Embodiment 11 | 3,200 | 0.1 | 100 |
| Comparative Example 1 | 950 | 0.02 | 81 |
| Comparative Example 2 | 1,000 | 0.02 | 84 |
| Comparative Example 3 | 1,350 | 0.025 | 91 |
| Comparative | 1,400 | 0.015 | 94.5 |
| Example 4 | | | |
| Comparative Example 5 | 1,150 | 0.012 | 90 |
| Comparative Example 6 | 1,200 | 0.01 | 93 |
| Comparative Example 7 | 950 | 0.01 | 85 |

In Tables 3 and 4, machinability refers to values obtained using machinability of common free-cutting steels as a standard (100% refers to an equivalent level).

Hereinafter, the embodiments and comparative examples will be evaluated with reference to Tables 1 to 4.

It was confirmed that the graphite steel wire rods according to Embodiments 1 to 11 had pearlite area fractions of 95.1% or more and graphitization rates of 97.5% or more, because the composition range of alloying elements and the cooling rate of 0.1 to 10°C/s according to the present disclosure were satisfied. On the contrary, it was confirmed that the graphite steel wire rods according to Comparative Examples 1 to 7 had pearlite area fractions of only 93.0 to 94.2% and graphitization rates of only 75 to 86%, because the cooling rate was out of the range of 0.1 to 10°C/s.

In addition, the wire rods of Embodiments 1 to 11, in which the complex CNC lathe and the CAM automatic lathe satisfied the conditions of a cutting speed of 1500 RPM or more and a feedrate of 0.03 mm/rev or more, were evaluated to have machinability at a level equivalent to that of common free-cutting steels (100% relative to common free-cutting steels) by the cutting process. It was confirmed that Comparative Examples 1 to 7, in which the conditions of the cutting speed and the feedrate were not satisfied, exhibited only 80 to 95% of machinability of that of common free-cutting steels.

While the present disclosure has been particularly described with reference to exemplary embodiments, it should be understood by those of skilled in the art that various changes and modifications in form and details may be made without departing from the spirit and scope of the present disclosure.

### [Industrial Applicability]

The graphite free-cutting steel according to the present disclosure may be applied to materials of small parts such as TV PEM nuts due to excellent machinability without generating fumes, and thus the present disclosure has industrial applicability.

## Claims

1. A graphite steel wire rod for TV PEM nut parts comprising, in percent by weight (wt%), 0.60 to 0.79% of carbon (C), 2.0 to 2.5% of silicon (Si), 0.7 to 1.3% of manganese (Mn), 0.2 to 0.5% of sulfur (S), 0.01 to 0.05% of aluminum (Al), 0.005 to 0.020% of titanium (Ti), 0.003 to 0.015% of nitrogen (N), 0.0001 to 0.015% of phosphorus (P), and the balance of iron (Fe) and inevitable impurities.

2. The graphite steel wire rod according to claim 1, wherein an area fraction of pearlite is 95% or more.

3. A method for manufacturing a graphite steel wire rod for TV PEM nut parts, the method comprising:
preparing a billet including, in percent by weight (wt%), 0.60 to 0.79% of carbon (C), 2.0 to 2.5% of silicon (Si), 0.7 to 1.3% of manganese (Mn), 0.2 to 0.5% of sulfur (S), 0.01 to 0.05% of aluminum (Al), 0.005 to 0.020% of titanium (Ti), 0.003 to 0.015% of nitrogen (N), 0.0001 to 0.015% of phosphorus (P), and the balance of iron (Fe) and inevitable impurities;
heating the billet;
hot rolling the heated billet into a wire rod; and
cooling the wire rod.

4. The method according to claim 3, wherein the heating comprises heat-treatment of maintaining the billet in a temperature range of 1050±100°C for 60 minutes or more.

5. The method according to claim 3, wherein the hot rolling comprises hot rolling the heated billet in a temperature range of 900 to 1150°C.

6. The method according to claim 3, wherein the cooling comprises cooling the wire rod to 500°C at a cooling rate of 0. 1°C/s to 10.0°C/s.

7. The method according to claim 3, further comprising air cooling after the cooling.

8. A graphite steel for TV PEM nut parts comprising, in percent by weight (wt%), 0.60 to 0.79% of carbon (C), 2.0 to 2.5% of silicon (Si), 0.7 to 1.3% of manganese (Mn), 0.2 to 0.5% of sulfur (S), 0.01 to 0.05% of aluminum (Al), 0.005 to 0.02% of titanium (Ti), 0.003 to 0.015% of nitrogen (N), 0.0001 to 0.015% of phosphorus (P), and the balance of iron (Fe) and inevitable impurities,
wherein in a microstructure, graphite grains are distributed in a ferrite matrix, a graphitization rate is 90% or more, and a pearlite fraction is less than 10%.

9. The graphite steel according to claim 8, wherein the graphitization rate is 99% or more.

10. A method for manufacturing a graphite steel for TV PEM nut parts, the method comprising:
manufacturing a wire rod including, in percent by weight (wt%), 0.60 to 0.79% of carbon (C), 2.0 to 2.5% of silicon (Si), 0.7 to 1.3% of manganese (Mn), 0.2 to 0.5% of sulfur (S), 0.01 to 0.05% of aluminum (Al), 0.005 to 0.020% of titanium (Ti), 0.003 to 0.015% of nitrogen (N), 0.0001 to 0.015% of phosphorus (P), and the balance of iron (Fe) and inevitable impurities; and
performing graphitization heat treatment on the manufactured wire rod.

11. The method according to claim 10, wherein the graphitization heat treatment comprises heat treatment in a temperature range of 700°C to 800°C for 5 hours or more.

12. A method for cutting the graphite steel for TV PEM nut parts according to claim 8 by using either complex CNC lathe or CAM automatic lathe.

13. The method according to claim 12, wherein the complex CNC lathe has a cutting speed of 1500 RPM or more and a feedrate of 0.03 mm/rev or more.

14. The method according to claim 12, wherein the CAM automatic lathe has a cutting speed of 1500 RPM or more and a feedrate of 0.03 mm/rev or more.
